# EUROPEAN PATENT APPLICATION

(11) **EP 1 688 046 A1**
(43) Date of publication of application: **09.08.2006**
(21) Application number: 06100496.6
(22) Date of filing: 18.01.2006
(51) Int. Cl.: A23G 9/12, A23G 9/04, A23G 9/22, B01F 7/08

(54) **machine for making and dispensing ice drinks**

(30) Priority: 31.01.2005 IT BO20050050
(71) Applicant: Ali SpA, 20123 Milano (IT)
(72) Inventor: Cocchi, Gino, 40137, BOLOGNA (IT); Vannini, Antonio, 40038, VERGATO (Bologna) (IT)
(74) Representative: Ghioni, Carlo Raoul Maria

(57) **Abstract**

A machine for making and dispensing ice drinks and the like comprises a tank (3) containing the drink, a power-driven stirring element (17) mounted inside the tank (3), means (34, 38) for enabling/disabling the motor that rotationally drives the stirring element (17), and a lid (21) for closing the top of the tank (3) and acting in conjunction with the means (34,38) to disable the motor when the lid (21) is open; the machine further comprises at least one track (29; 33) on which the lid (21) can slide and defining a fixed direction in which the lid (21) is forced to move when it is fitted or removed.

## Description

This invention relates to a machine for making and dispensing ice drinks and the like.

In particular, this invention relates to a machine of the type comprising a tank which is closed at the top by a removable lid and contains, close to the bottom of it, a power driven stirring screw and the evaporator of a cooling system. The drink is mixed and cooled in the tank and then dispensed through a tap.

For safety reasons, prior art machines of this kind are usually equipped with lock and key used to close the lid so that access to the inside of the tank is restricted to authorised persons only. The disadvantage of these locks is that the key may be lost or may not be immediately available to personnel responsible for using the machine.

For this reason, prior art has proposed safety devices of the type in which the screw motor is fitted with a switch tripped by a rod. When the lid is closed, a spring pushes the rod against the underside of a protrusion located at the back of the lid. When the lid is raised in order to open the tank, the rod that controls the switch moves lengthways in such a way that operation of the motor is inhibited.

These devices, which are certainly more practical than the above mentioned lock and key systems, have however proved unreliable because the operator using the machine tends to access the inside of the tank by sliding the lid sideways instead of raising it in the manner that would actuate the rod. As a result, the rod remains in the position in which it enables motor operation while it should, instead move into the safety position in which the motor is prevented from starting.

The aim of this invention is to provide a machine for making and dispensing ice drinks and the like that is free of the above mentioned disadvantages.

This invention accordingly provides a machine for making and dispensing ice drinks and the like comprising the characteristics defined in one or more of the appended claims.

The invention will now be described with reference to the accompanying drawings which illustrate a preferred embodiment of it and in which:
- Figure 1 shows a preferred embodiment of the machine according to the invention;
- Figure 2 illustrates a detail of the machine of Figure 1;
- Figure 3 is a cross section of a portion of the detail of Figure 2; and
- Figure 4 illustrates another embodiment of the detail of Figure 2.

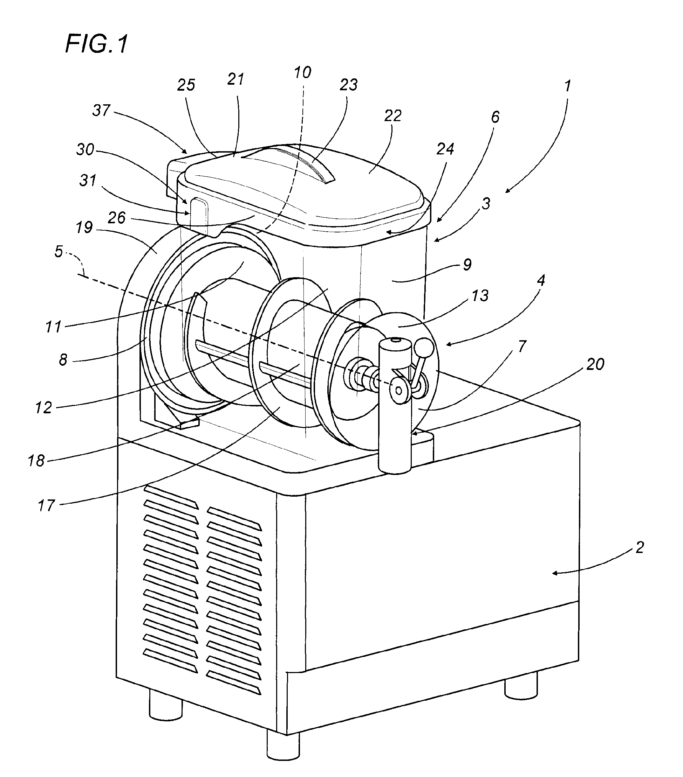

With reference to Figure 1, the numeral 1 denotes in its entirety a machine for making and dispensing ice drinks, granitas and the like.

The machine 1 comprises a base 2 that houses a customary cooling system, not illustrated.

The base 2 mounts a tank 3 containing the drink to be dispensed. The tank 3 has a substantially cylindrical bottom portion 4 that extends around a horizontal axis 5 and an upper portion 6 that constitutes an opening for filling the portion 4 from above.

In the direction of the axis 5, the portion 4 is delimited by a wall 7 at the front and by an opening 8 at the back. The wall 7 and the opening 8 are both circular.

The upper portion 6 is substantially in the shape of a parallelepiped and is laterally delimited by a front wall 9, a rear wall 10, parallel to the wall 9, and two side walls 11. The walls 11, which are parallel to each other and at right angles to the walls 9 and 10, are joined to the latter by respective rounded longitudinal corners 12 at right angles to the direction of the axis 5.

The front wall 9 lies in the same plane as the wall 7 and, together with the latter, forms a flat front wall 13 of the tank 3, facing the operator and at right angles to the axis 5.

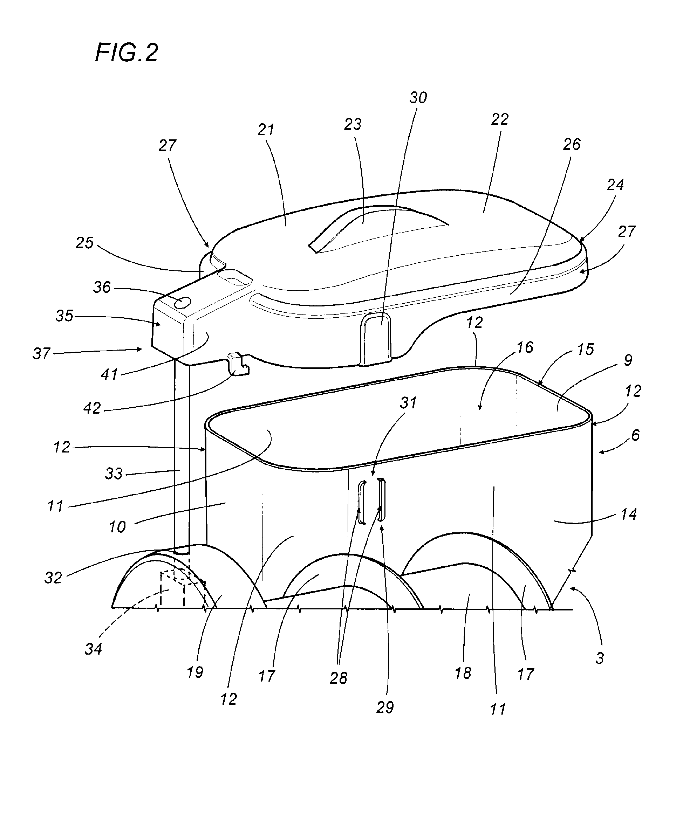

As illustrated more clearly in Figure 2, the walls 9, 10 and 11 and the corners 12 define a side wall 14 that is delimited at the top by a rectangular brim 15 having rounded edges and surrounding an opening 16 providing access to the inside of the tank 3.

The bottom portion 4 of the tank 3 houses a screw 17 for stirring the drink and the evaporator 18 of the aforementioned cooling system.

The screw 17 is rotationally driven about the axis 5 and around the evaporator 18, by a motor, not illustrated, mounted in a shoulder 19 which forms part of the base 2 and which seals the above mentioned opening 8.

The drink is mixed and cooled in the tank 3 and then dispensed through a tap 20 mounted on the front wall 7 of the tank 3.

The upper opening 16 of the tank 3 is closed by a removable lid 21.

The lid 21 is substantially in the shape of a parallelepiped and has a top wall 22 equipped with a central handgrip 23. The lid 21 is laterally delimited by a front wall 24, a rear wall 25, parallel to the wall 24, and two side walls 26. The walls 26, which are parallel to each other and at right angles to the walls 24 and 25, are joined to the latter by respective rounded longitudinal corners 27.

The lateral dimensions of the lid 21 are slightly greater than those of the side wall 14 of the tank 3, so that, when closed, the lid 21 closely surrounds the wall 14 below the brim 15.

The side walls 11 of the tank 3 each have, in the vicinity of the brim 15, at least one outer longitudinal rib 28 parallel to the corners 12. More specifically, as illustrated in Figure 2, each wall 11 has two parallel ribs 28 together forming a track 29 in which the lid 21 can slide.

Each of the two side walls 26 of the lid 21 has a groove 30 designed to receive a respective track 29 and constituting, together with the latter, guiding and coupling means 31 located between the tank 3 and the lid 21 and defining a fixed direction in which the lid 21 is forced to move when it is fitted or removed. More specifically, the lid 21 is forced to slide in a direction parallel to the corners 12 to either open or close the tank 3. In both cases, the tracks 29 slide in the respective grooves 30.

In another embodiment, only one wall 11 has the above mentioned track 29 and only one wall 26 has the groove 30 for receiving the track 29.

The shoulder 19 of the base 2 has at the top of it a hole 32 through which the fixed rod 33 protrudes, the latter extending vertically in a direction substantially parallel to the corners 12. The end of the rod 33 located inside the shoulder 19 is positioned close to a circuit that controls the motor that rotationally drives the screw 17. The control circuit is represented schematically as a block 34 and its operation is described in more detail below.

As shown in Figure 2, the outside of the lid 21 rear wall 25 mounts a prismatic block 35 which has, in a substantially central position, a through hole 36 parallel to the corners 27.

The hole 36 is just a little larger in diameter than the rod 33 and the latter is of a length such that it extends into the hole 36 when the lid 21 is in the closed position.

The rod 33 and the hole 36 therefore constitute further guiding and coupling means 37 that define a fixed direction in which the lid 21 is forced to move when it is fitted or removed.

More specifically, when the tank 3 is opened or closed, the lid 21 is forced to slide in a direction parallel to the corners 12. In both cases, the rod 33 acts as a track that guides the sliding movement of the lid 21.

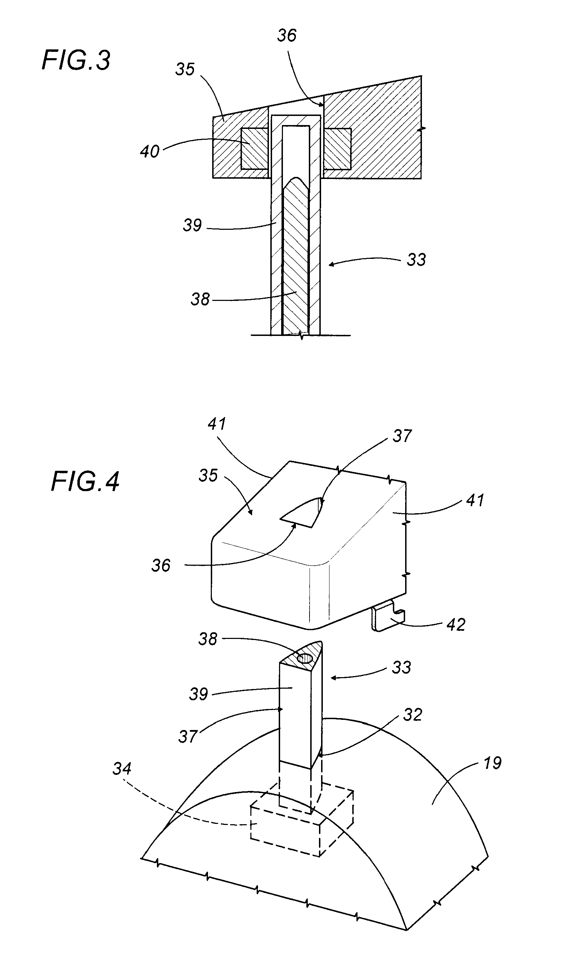

As illustrated in Figure 3, the rod 33 has a sensor 38 inside it and a plastic covering 39 on the outside of it, and at the hole 36 there is a magnet 40 embedded in the prismatic block 35.

The sensor 38 is connected to the control 34 and is sensitive to magnetic induction: thus, depending on whether a magnetic field is present or not, it sends a drive signal to the circuit 34 which in turn enables or disables the motor of the screw 17.

In the embodiment illustrated, the magnetic field is produced by the permanent magnet 40.

Thus, when the lid 21 is in the closed position, the magnet 40 is close to and energises the sensor 38 which sends a signal to the circuit 34 to enable motor operation.

When the lid 21 is opened, on the other hand, the rod 33 is made to slide in the hole 36, thus moving the magnet 40 away from the sensor 38, which is deenergised and sends a signal that disables the operation of the motor of the screw 17.

It should be noticed that the circuit 34 and the sensor 38 constitute means for enabling/disabling the motor of the screw 17 under the effect of the magnetic field produced by the magnet 40.

The rod 33 and the hole 36 may be cylindrical in shape (Figure 2), or, in another embodiment, may have any other shape such as, for example, that of a prism (Figure 4), suitable for defining a fixed relative position between the lid 21 and the rod 33. In other words, with reference to Figure 4, the non-equilateral triangular shape of the cross section of the rod 33 and of the hole 36 ensure that as soon as the rod 33 is inserted into the hole 36, the lid 21 is correctly positioned over the tank 3.

The two sides 41 of the block 35 that are parallel to the side walls 26 of the lid 21 are fitted with respective hooks 42 used to hang the lid 21, when removed from the tank 3, on one of the two side walls 11, over the brim 15.

The invention described has evident industrial applications and can be modified and adapted in several ways without thereby departing from the scope of the inventive concept. Moreover, all the details of the invention may be substituted by technically equivalent elements.

## Claims

1. A machine for making and dispensing ice drinks and the like comprises a tank (3) containing the drink, a power-driven stirring element (17) mounted inside the tank (3), means (34, 38) for enabling/disabling the motor that rotationally drives the stirring element (17), and a lid (21) for closing the top of the tank (3) and acting in conjunction with the enabling/disabling means (34, 38) to disable the motor when the lid (21) is open; the machine being **characterised in that** it further comprises guiding and coupling means (31; 37) defining a fixed direction in which the lid (21) is forced to move when it is fitted or removed.

2. The machine according to claim 1, **characterised in that** the guiding and coupling means (31; 37) comprise at least one track (29; 33) on which the lid (21) can slide.

3. The machine according to claim 2, **characterised in that** the guiding and coupling means (31) are located between the tank (3) and the lid (21).

4. The machine according to claim 3, where the tank (3) has an open top (6) through which it can be filled and which is laterally delimited by a front wall (9), a rear wall (10) and two side walls (11), **characterised in that** the track (29) is associated with a respective side wall (11).

5. The machine according to claim 4, **characterised in that** the track (29) is defined by at least one longitudinal rib (28) located on the outside of the side wall (11) and extending in the fixed direction.

6. The machine according to claim 2, comprising a shoulder (19) coupled with the tank (3) and **characterised in that** the track (33) is defined by a rod (33) supported by the shoulder (19) and extending in the fixed direction.

7. The machine according to claim 6, **characterised in that** the rod (33) comprises a sensor (38) for controlling the circuit (34), the sensor and the control circuit together constituting the means for enabling/disabling the motor.

8. The machine according to claim 7, **characterised in that** the sensor (38) is sensitive to magnetic induction and acts in conjunction with a permanent magnet (40) mounted on the (21) to control the circuit (34).

9. The machine according to claim 8, **characterised in that** the permanent magnet (40) is embedded in the lid (21) close to the hole (36) made in the lid (21) itself, the rod (33) being able to slide freely in the hole (36).

10. The machine according to claim 9, **characterised in that** the hole (36) in the lid (21) and the rod (33) constitute the guiding and coupling means (37).
